# EUROPEAN PATENT SPECIFICATION

(11) **EP 1 681 327 B1**
(45) Date of publication and mention of the grant of the patent: **19.08.2009**
(21) Application number: 06000396.9
(22) Date of filing: 10.01.2006
(51) Int. Cl.: C09J 133/00

(54) **Pressure-sensitive adhesive product and substrate for pressure-sensitive adhesive product**
DRUCKEMPFINDLICHES KLEBEPRODUKT UND TRÄGER FÜR DRUCKEMPFINDLICHES KLEBEPRODUKT
ADHESIF AUTOCOLLANT ET SUBSTRAT POUR ADHESIF AUTOCOLLANT

(30) Priority: 13.01.2005 JP 2005005966
(43) Date of publication of application: 19.07.2006
(73) Proprietor: NITTO DENKO CORPORATION, Osaka (JP)
(72) Inventor: Imoto, Takashi, Ibaraki-shi, Osaka (JP); Amano, Tsuneyuki, Ibaraki-shi, Osaka (JP)
(74) Representative: Grünecker, Kinkeldey, Stockmair & Schwanhäusser Anwaltssozietät

(56) References cited:
- US-A1- 2006 154 097

## Description

### FIELD OF THE INVENTION

The present invention relates to a pressure-sensitive adhesive product and a substrate for the pressure-sensitive adhesive product.

### BACKGROUND OF THE INVENTION

Recently, various molded articles such as housings for electronic devices, e.g., housings for so-called "mobile phone" and housing for printers, have been recycled. There are cases that various pressure-sensitive adhesive labels, so-called nameplate labels, for indicating product information such as name of manufacturer, name of country of manufacture, name of product, product number, and product lot number are attached to electronics devices. When a pressure-sensitive adhesive label has been attached to an electronics device as above, in the case that the raw material of the housing of the electronic device is different from the raw material of the pressure-sensitive adhesive label, the raw material of the pressure-sensitive adhesive label may be incorporated into the raw material of the housing of the electronic device when the label is not peeled off at its recycle. Thus, physical properties of the recycled raw material may vary in some cases. For example, in the case that the raw material of the adherend (molded article) to be attached is a styrene-based resin, when the raw material of the substrate of the pressure-sensitive adhesive label is a polyester-based resin such as polyethylene terephthalate, a styrene-based resin is low in compatibility with a polyester-based resin, so that reproduction of the plastic (adherend derived from the styrene-based resin) with the pressure-sensitive adhesive label attached thereto results in insufficient strength of a molded article from the reproduced plastic and/or generation of defect(s) in appearance. Therefore, as the pressure-sensitive adhesive label, there has been developed a label using, as the raw material of the substrate, the same raw material or the same kind of raw material as the raw material of the adherend (molded article) to be attached or a raw material having a good compatibility therewith. For example, since a housing for electronic devices uses a styrene-based resin such as an acrylonitrile-butadiene-styrene-based copolymer, there has been proposed a pressure-sensitive adhesive label using a styrene-based resin such as polystyrene, an acrylonitrile-butadiene-styrene copolymer, or an acrylonitrile-styrene-acrylic rubber copolymer as the raw material for the substrate (see JP-A-8-67857, JP-A-2000-338882 (the term "JP-A" as used herein means an "unexamined published Japanese patent application") and JP-T-2003-521719 (the term "JP-T" as used herein means an "unexamined published International patent application")).

When a pressure-sensitive adhesive label was attached to the housing for an electronics device by mistake at the attachment of the label or when a trouble arises in the electronics device after the pressure-sensitive adhesive label is attached to the housing of the electronic device, in order to peel off the pressure-sensitive adhesive label to use the housing of the electronics device again, a pressure-sensitive adhesive label which is capable of easily being peeled off and does not leave any component of the pressure-sensitive adhesive on the surface of the adherend after peeling (without so-called "adhesive residue") has been desired. That is, a pressure-sensitive adhesive label having a good reworkability has been desired.

However, polystyrene is brittle and also has a low heat resistance. Moreover, an acrylonitrile-butadiene-styrene copolymer has a low weather resistance. On the other hand, an acrylonitrile-styrene-acrylic rubber copolymer can overcome these problems but a conventional document (JP-T-2003-521719) and the like only propose use of the acrylonitrile-styrene-acrylic rubber copolymer but there is no description of a mixture of an acrylonitrile-styrene copolymer and an acrylonitrile-styrene-acrylic rubber copolymer and a mixing ratio of these copolymers. Therefore, a substrate for a pressure-sensitive adhesive product having good physical properties such as heat resistance, weather resistance, rigidity, and tear resistance has been required.

### SUMMARY OF THE INVENTION

Accordingly, an object of the invention is to provide a pressure-sensitive adhesive product which is capable of substantially being recycled together with an adherend in the case that the adherend is formed from a styrene-based resin or a polycarbonate-based resin and which has good heat resistance, weather resistance, rigidity, and tear resistance, and also a substrate for the pressure-sensitive adhesive product.

As a result of extensive studies for achieving the above objects, the present inventors have found that a pressure-sensitive adhesive product which is capable of substantially being recycled together with an adherend and is excellent in heat resistance, weather resistance, rigidity, and tear resistance can be obtained by using a substrate formed from a resin composition containing an acrylonitrile-styrene copolymer and an acrylonitrile-styrene-acrylic rubber copolymer as main components and adjusting the ratio of the acrylonitrile-styrene copolymer to the acrylonitrile-styrene-acrylic rubber copolymer to a specific ratio. The invention has been accomplished based on these findings.

Namely, the invention relates to a pressure-sensitive adhesive product comprising a substrate having formed on at least one surface thereof a pressure-sensitive adhesive layer, wherein the substrate is formed from a resin composition containing an acrylonitrile-styrene copolymer and an acrylonitrile-styrene-acrylic rubber copolymer as main components and the weight ratio of the acrylonitrile-styrene copolymer to the acrylonitrile-styrene-acrylic rubber copolymer is 90/10 to 20/80.

Moreover, the invention relates to a substrate for a pressure-sensitive adhesive product having a pressure-sensitive adhesive layer, which is formed from a resin composition containing an acrylonitrile-styrene copolymer and an acrylonitrile-styrene-acrylic rubber copolymer as main components and the weight ratio of the acrylonitrile-styrene copolymer to the acrylonitrile-styrene-acrylic rubber copolymer being 90/10 to 20/80.

In the pressure-sensitive adhesive product and the substrate for a pressure-sensitive adhesive product of the invention, the resin composition preferably has a form where the acrylonitrile-styrene-acrylic rubber copolymer is dispersed in the acrylonitrile-styrene copolymer. Moreover, in the acrylonitrile-styrene-acrylic rubber copolymer, the ratio of the acrylic rubber unit as a constitutional unit is 30 to 70% by weight relative to the acrylonitrile-styrene-acrylic rubber copolymer.

As the above acrylonitrile-styrene-acrylic rubber copolymer, a graft acrylonitrile-styrene-acrylic rubber copolymer having a form where an acrylonitrile-styrene copolymer is grafted to an acrylic rubber is suitably used. In an acrylonitrile-styrene copolymer unit in the graft acrylonitrile-styrene-acrylic rubber copolymer, the molar ratio of an acrylonitrile unit to a styrene unit is preferably 30/70 to 45/55.

Moreover, in the acrylonitrile-styrene copolymer, the molar ratio of an acrylonitrile unit to a styrene unit is preferably 30/70 to 45/55.

Furthermore, as the above pressure-sensitive adhesive product and substrate for the pressure-sensitive adhesive product, the thickness of the substrate is preferably 20 to 200 µm.

### DETAILED DESCRIPTION OF THE INVENTION

The pressure-sensitive adhesive product of the invention has a constitution wherein a pressure-sensitive adhesive layer is formed on at least one surface of a substrate, the substrate being formed from a resin composition containing an acrylonitrile-styrene copolymer (sometimes referred to as "A-S copolymer") and an acrylonitrile-styrene-acrylic rubber copolymer (sometimes referred to as "A-S-A copolymer") as main components (sometimes referred to as "AS/ASA resin composition") and the weight ratio of the A-S copolymer to the A-S-A copolymer being 90/10 to 20/80. As above, since the substrate has been formed from the resin composition containing the A-S copolymer and the A-S-A copolymer as main components, in the case that an adherend formed from a styrene-based resin or a polycarbonate-based resin is used, the product can be substantially recycled together with the adherend (so-called "material recycle"). In this connection, the sentence "the product can be substantially recycled together with the adherend" means that it is possible to produce a molded article the same as or different from the original adherend using a recycled raw material (material) in the case that the pressure-sensitive adhesive product is recycled together with the adherend (material recycle) in a state that the pressure-sensitive adhesive product of the invention is attached to the adherend, in particular, a molded article from a styrene-based resin or a polycarbonate-based resin. Therefore, the molded article produced using the recycled raw material may be a molded article having any physical properties, e.g., one wherein good physical properties inherent to the original adherend are effectively retained, one wherein good physical properties inherent to the original adherend are effectively retained and also other good physical properties are imparted, or one wherein other good physical properties are imparted instead of the good physical properties inherent to the original adherend.

In addition, since the resin composition as the substrate contains the A-S copolymer and the A-S-A copolymer in a ratio of the A-S copolymer to the A-S-A copolymer of 90/10 to 20/80, a balance of various physical properties of the substrate is good and in particular, physical properties such as heat resistance, weather resistance, rigidity, and tear resistance are excellent. Therefore, for example, since the substrate has an excellent rigidity, the pressure-sensitive adhesive product can be easily attached when the pressure-sensitive adhesive product using the substrate is attached to an adherend. Moreover, since the substrate has an excellent tear resistance, the product can be easily peeled off after attached to the adherend. Furthermore, since the substrate has a good heat resistance, the product can be also attached to an adherend, which may be heated to a high temperature, e.g., a high temperature of about 80°C. Also, since the substrate has a good weather resistance, the product can be attached to an adherend, which may be exposed to natural light.

### (Substrate)

In the pressure-sensitive adhesive product of the invention, the AS/ASA resin composition constituting the substrate contains the A-S copolymer and the A-S-A copolymer as main components in the ratio of the A-S copolymer to the A-S-A copolymer of 90/10 to 20/80. The ratio of the A-S copolymer to the A-S-A copolymer is not particularly limited as far as the ratio is within the above range but the ratio is preferably 85/15 to 40/60, particularly 80/20 to 60/40. When the ratio of the A-S copolymer to the total weight of the A-S copolymer and the A-S-A copolymer is larger than 90% by weight (i.e., the ratio of the A-S-A copolymer is less than 10% by weight), tear resistance decreases due to a low tear strength of the substrate even when a pressure-sensitive adhesive having a good re-peeling ability is used. Therefore, the pressure-sensitive adhesive product is torn and cannot be easily peeled off and re-peeling ability decreases at the time when the pressure-sensitive adhesive product is attached to the adherend and then peeled off. On the other hand, when the ratio of the A-S copolymer to the total weight of the A-S copolymer and the A-S-A copolymer is less than 20% by weight (i.e., the ratio of the A-S-A copolymer is larger than 80% by weight), rigidity of the substrate decreases and the pressure-sensitive adhesive product may bend at the time when the pressure-sensitive adhesive product is attached to the adherend, so that the product cannot be easily attached and thus handling property decreases.

The A-S-A copolymer is not particularly limited as far as it is a copolymer containing a unit of acrylonitrile (acrylonitrile unit), a unit of styrene (styrene unit), and a unit of acrylic rubber (acrylic rubber unit) and the copolymer can be suitably selected from among known A-S-A copolymers for use. In the A-S-A copolymer, the ratio of the acrylic rubber unit as a constitution unit is not particularly limited but is 30 to 70% by weight, preferably 40 to 60% by weight, more preferably 45 to 55% by weight relative to the A-S-A copolymer. When the ratio of the acrylic rubber unit is less than 30% by weight relative to the A-S-A copolymer, flexibility necessary as a film cannot be obtained. On the other hand, when the ratio is larger than 70% by weight, the copolymer is difficult to handle as an A-S-A copolymer owing to blocking and the like.

In the invention, as the A-S-A copolymer, an A-S-A copolymer containing the acrylic rubber unit and a unit of an acrylonitrile-styrene copolymer containing an acrylonitrile unit and a styrene unit as constitutional units (acrylonitrile-styrene copolymer unit) as constitutional units is suitable. In particularly, a graft A-S-A copolymer having a form wherein an acrylonitrile-styrene copolymer is grafted to an acrylic rubber can be suitably used. In the acrylonitrile-styrene copolymer unit in the graft A-S-A copolymer, the ratio of the acrylonitrile unit to the styrene unit is not particularly limited but, for example, the molar ratio of the acrylonitrile unit to the styrene unit is 30/70 to 45/55, preferably 35/65 to 40/60.

In this connection, the acrylonitrile-styrene copolymer unit in the graft A-S-A copolymer preferably has a form of a random copolymer but may have other forms such as a block copolymer wholly or partially.

The physical properties of the graft A-S-A copolymer can be controlled by the ratio of the acrylic rubber unit to the acrylonitrile-styrene copolymer unit (graft rate), particle size (average particle size) of the acrylic rubber unit, the weight-average molecular weight of the acrylic rubber unit, the weight-average molecular weight of the acrylonitrile-styrene copolymer, the ratio of the acrylonitrile unit to the styrene unit in the acrylonitrile-styrene copolymer unit, and the like.

Moreover, the A-S copolymer is not particularly limited as far as it is a copolymer containing an acrylonitrile unit and a styrene unit as constitutional units and can be suitably selected from among known A-S copolymers for use. The A-S copolymer preferably has a form of a random copolymer but may have other forms such as a block copolymer wholly or partially.

In the A-S copolymer, the ratio of the acrylonitrile unit to the styrene unit is not particularly limited but, for example, the molar ratio of the acrylonitrile unit to the styrene unit is 30/70 to 45/55, preferably 35/65 to 40/60.

The physical properties of the A-S copolymer can be controlled by the weight-average molecular weight, the ratio of the acrylonitrile unit to the styrene unit, and the like.

In the invention, the AS/ASA resin composition is not particularly limited as far as it is a resin composition containing the A-S copolymer and the A-S-A copolymer in a determined ratio but is preferably has a form where the A-S-A copolymer is dispersed in the A-S copolymer. Thus, the AS/ASA resin composition having a form where the A-S-A copolymer, in particular, a graft AS-A copolymer, is dispersed in the A-S copolymer can make various physical properties, particularly rigidity and tear resistance at its molding into a substrate for a pressure-sensitive adhesive product extremely good.

The process for producing the AS/ASA resin composition is not particularly limited and there may be, for example, mentioned (1) a process of mixing an A-S copolymer and an A-S-A copolymer prepared separately (so-called "blending process"), (2) a process for polymerizing acrylonitrile and styrene in the presence of an acrylic rubber under conditions that an A-S copolymer and an A-S-A copolymer are prepared (so-called "graft process"), (3) a process of mixing an A-S copolymer and an A-S-A copolymer prepared by polymerizing acrylonitrile and styrene in the presence of an acrylic rubber with an A-S copolymer or an A-S-A copolymer prepared separately (so-called "graft blending process or graft blending combined process"), and the like.

In the case that the A-S copolymer and the A-S-A copolymer are prepared separately, the A-S copolymer can be prepared by polymerization using acrylonitrile and styrene as monomer components with adopting known polymerization conditions. Moreover, the A-S-A copolymer can be prepared by polymerization using acrylonitrile and styrene as monomer components in the presence of an acrylic rubber with adopting known polymerization conditions. In this connection, at the preparation of the A-S-A copolymer, since there is a case that an acrylonitrile-styrene copolymer which is not bound to the acrylic rubber may form depending on the polymerization conditions, it is desirable to adopt such polymerization conditions that the production ratio of the acrylonitrile-styrene copolymer decreases as far as possible.

The thickness of the substrate is not particularly limited and can be suitably selected depending on the purpose and can be selected from the range of 20 to 200 µm, preferably 30 to 150 µm, more preferably 50 to 100 µm. In this connection, the substrate may have any form of a monolayer layer and a laminated layer.

The process for producing the substrate is not particularly limited and can be produced utilizing known processes for producing substrates. For example, the substrate can be produced by molding the above resin composition utilizing extrusion molding with a T-die, inflation molding, calender molding, or the like.

The surface of the substrate may be subjected to a suitable known or conventional surface treatment, e.g., a physical treatment such as corona discharge treatment or plasma treatment or a chemical treatment such as undercoat treatment or backside treatment. Moreover, the substrate may be mixed with various additives such as a filler (inorganic filler, organic filler, etc.), an antiaging agent, an antioxidant, a UV absorber, a lubricant, a plasticizer, and a colorant (pigment, dye, etc.).

In the invention, as the substrate, an excellent heat resistance is desired in some cases depending on intended uses. In the intended uses where heat resistance is desired, a substrate having a shrinkage ratio (80°C×1 hour) of 1% or less, preferably 0.5% or less, more preferably 0.2% or less can be suitably used as the substrate. In this connection, the shrinkage ratio of the substrate can be determined by measuring the size before and after heating, by means of a slide caliper.

### (Pressure-sensitive adhesive layer)

The pressure-sensitive adhesive constituting the pressure-sensitive adhesive layer is not particularly limited and, for example, a known pressure-sensitive adhesive such as an acrylic pressure-sensitive adhesive, a rubber-based pressure-sensitive adhesive, a polyester-based pressure-sensitive adhesive, a urethane-based pressure-sensitive adhesive, a polyamide-based pressure-sensitive adhesive, an epoxy-based pressure-sensitive adhesive, a vinyl alkyl ether-based pressure-sensitive adhesive, a silicone-based pressure-sensitive adhesive, or a fluorine-based pressure-sensitive adhesive can be used. Moreover, the pressure-sensitive adhesive may be a hot-melt type pressure-sensitive adhesive. The pressure-sensitive adhesive may be used solely or in combination of two or more thereof.

In this connection, the pressure-sensitive adhesive may be any form of pressure-sensitive adhesives, such as a solvent-type pressure-sensitive adhesive, an emulsion-type pressure-sensitive adhesive, an oligomer-type pressure-sensitive adhesive, a solid-type pressure-sensitive adhesive, or the like. In the case that the pressure-sensitive adhesive is a solvent-type pressure-sensitive adhesive, the solvent to be used can be suitably selected from known solvents depending on the kind of the pressure-sensitive adhesive. In the case that the pressure-sensitive adhesive is an emulsion-type pressure-sensitive adhesive, an emulsifier can be used, if necessary, and the emulsifier can be selected from known emulsifiers and used depending on the kind of the pressure-sensitive adhesive.

Moreover, the pressure-sensitive adhesive may contain suitable additives such as a tackifying agent, a softening agent, a crosslinking agent, a plasticizer, a filler, an antiaging agent, a UV absorber, an antioxidant, a colorant (pigment, dye, etc.), a surfactant, an antistatic agent, a foam inhibitor, and a peeling regulator depending on the kind of the pressure-sensitive adhesive, in addition to the polymer component such as a pressure-sensitive adhesive component (base polymer).

As the pressure-sensitive adhesive, an acrylic pressure-sensitive adhesive can be suitably used. The acrylic pressure-sensitive adhesive contains an acrylic polymer as a main component or a base polymer. The acrylic polymer is not particularly limited but, as a main constitutional monomer component (monomer main component), an alkyl (meth)acrylate (alkyl acrylate or alkyl methacrylate) is preferably used. Specifically, examples of the alkyl (meth)acrylate include methyl (meth)acrylate, ethyl (meth)acrylate, propyl (meth)acrylate, isopropyl (meth)acrylate, butyl (meth)acrylate, isobutyl (meth)acrylate, s-butyl (meth)acrylate, t-butyl (meth)acrylate, pentyl (meth)acrylate, isoamyl (meth)acrylate, neopentyl (meth)acrylate, hexyl (meth) acrylate, heptyl (meth) acrylate, 2-ethylhexyl (meth)acrylate, octyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, and the like. The alkyl (meth)acrylate may be used solely or in combination of two or more thereof.

As such an alkyl (meth)acrylate, an alkyl (meth)acrylate having an alkyl group of 8 or more carbon atoms, particularly 2-ethylhexyl acrylate can be suitably used. Namely, as the acrylic polymer, an acrylic polymer containing an alkyl (meth)acrylate having an alkyl group of 8 or more carbon atoms, particularly 2-ethylhexyl acrylate as a monomer main component is suitable. By using the alkyl (meth)acrylate having an alkyl group of 8 or more carbon atoms as the alkyl (meth)acrylate, re-peeling ability and adhesive-residue resistance can be improved.

As the monomer components constituting the acrylic polymer, as far as an alkyl (meth)acrylate is used as a main component of the monomer, the other monomer component copolymerizable with the alkyl (meth)acrylate (sometimes referred to as "copolymerizable monomer component") may be used. In this connection, the ratio of the alkyl (meth)acrylate to the total amount of the monomer components constituting the acrylic polymer is desirably 50% by weight or more. When the ratio of the alkyl (meth)acrylate is less than 50% by weight based on the total amount of the monomer components constituting the acrylic polymer, the properties as an acrylic polymer are hardly exhibited in some cases.

The copolymerizable monomer component can be used for introducing a crosslinking site into the acrylic polymer or enhancing an aggregating ability of the acrylic polymer. The copolymerizable monomer component may be used solely or in combination of two or more thereof.

Specifically, in order to introduce a crosslinking site into the acrylic polymer, a functional group-containing monomer component, especially a thermally crosslinkable functional group-containing monomer component for introducing a crosslinking site into the acrylic polymer, can be used as the copolymerizable monomer component. The use of the functional group-containing monomer component can enhance adhesive force toward the adherend. Such a functional group-containing monomer component is not particularly limited as far as it is a monomer component copolymerizable with the alkyl (meth)acrylate and having a functional group which becomes a crosslinking site. Examples thereof include carboxyl group-containing monomers such as (meth)acrylic acid, itaconic acid, crotonic acid, maleic acid, fumaric acid, and isocrotonic acid or acid anhydrides thereof such as maleic anhydride and itaconic anhydride; hydroxyl group-containing monomers, e.g., hydroxyalkyl (meth)acrylates such as 2-hydroxyethyl (meth)acrylate, 2-hydroxypropyl (meth)-acrylate, and 2-hydroxybutyl (meth)acrylate and also vinyl alcohol and allyl alcohol; amide-based monomers such as (meth)acrylamide, N,N-dimethyl(meth)acrylamide, N-butyl(meth)acrylamide, N-methylol(meth)acrylamide, N-methylolpropane(meth)acrylamide, N-methoxymethyl(meth)-acrylamide, and N-butoxymethyl(meth)acrylamide; amino group-containing monomers such as aminoethyl (meth)acrylate, N,N-dimethylaminoethyl (meth)acrylate, and t-butylaminoethyl (meth)acrylate; epoxy group-containing monomers such as glycidyl (meth)acrylate and methylglycidyl (meth)acrylate; cyano-containing monomers such as acrylonitrile and methacrylonitrile; monomers having a nitrogen atom-containing ring, such as N-vinyl-2-pyrrolidone, N-methylvinylpyrrolidone, N-vinylpyridine, N-vinylpiperidone, N-vinylpyrimidine, N-vinylpiperazine, N-vinylpyrazine, N-vinylpyrrole, N-vinylimidazole, N-vinyloxazole, N-vinylmorpholine, N-vinylcaprolactam, and N-(meth)acryloylmorpholine; and the like. As the functional group-containing monomer component, a carboxyl group-containing monomer such as acrylic acid or an acid anhydride thereof can be suitably used.

Moreover, as the copolymerizable monomer component, the other copolymerizable monomer component can be used in order to enhance the aggregating ability of the acrylic polymer. Examples of the other copolymerizable monomer component include vinyl ester-based monomers such as vinyl acetate and vinyl propionate; styrene-based monomers such as styrene, substituted styrene (α-methylstyrene, etc.), and vinyltoluene; non-aromatic ring-containing (meth)acrylate esters such as cycloalkyl (meth)acrylates [cyclohexyl (meth)acrylate, cyclopentyl di(meth)acrylate, etc.] and bornyl (meth)acrylate and isobornyl (meth)acrylate; aromatic ring-containing (meth)acrylate esters such as aryl (meth)acrylate [phenyl (meth)acrylate, etc.], aryloxyalkyl (meth)acrylate [phenoxyethyl (meth)acrylate, etc.], and arylalkyl (meth)acrylates [benzyl (meth)acrylate]; olefinic monomers such as ethylene, propylene, isoprene, butadiene, and isobutylene; vinyl chloride and vinylidene chloride; isocyanate group-containing monomers such as 2-(meth)acryloyloxyethyl isocyanate; alkoxy group-containing monomers such as methoxyethyl (meth)acrylate and ethoxyethyl (meth)acrylate; vinyl ether-based monomers such as methyl vinyl ether and ethyl vinyl ether; and also polyfunctional monomers such as 1,6-hexanediol di(meth)acrylate, ethylene glycol di(meth)acrylate, diethylene glycol di(meth)acrylate, triethylene glycol di(meth)acrylate, tetraethylene glycol di (meth) acrylate, polyethylene glycol di(meth)acrylate, propylene glycol di(meth)acrylate, polypropylene glycol di(meth)acrylate, neopentyl glycol di(meth)acrylate, pentaerythritol di(meth)acrylate, trimethylolpropane tri(meth)acrylate, pentaerythritol tri(meth)acrylate, dipentaerythritol hexa(meth)acrylate, glycerin di(meth)acrylate, epoxy acrylates, polyester acrylates, urethane acrylates, divinylbenzene, butyl di(meth)acrylate, and hexyl di(meth)acrylate; and the like.

As the process for polymerizing the acrylic polymer, known or conventional polymerization processes, e.g., an emulsion polymerization process, a solution polymerization process, a suspension polymerization process, and the like, can be adopted. At the polymerization, various polymerization processes such as a general all-components-charging process (at once polymerization process), a monomer-dropping process (continuously dropping process, portion-wise dropping process, etc.) can be adopted. The polymerization temperature can be suitably selected according to the kind of the monomer, the kind of an initiator, and the like and can be, for example, selected from the range of 20 to 100°C.

The polymerization initiator to be used at the polymerization can be suitably selected from known or conventional polymerization initiators (azo polymerization initiators, persulfate salt-based polymerization initiators, peroxide-based polymerization initiators, redox system polymerization initiators, etc.) according to the kind of the polymerization process. Moreover, at the polymerization, a chain transfer agent can be used for regulating the molecular weight. As the chain transfer agent, known or conventional chain transfer agents can be used.

In the invention, for the purpose of controlling pressure-sensitive adhesiveness of the pressure-sensitive adhesive layer, a tackifying resin is preferably contained in the pressure-sensitive adhesive. The tackifying resin is not particularly limited and there may be, for example, mentioned a rosin-based tackifying resin, a terpene-based tackifying resin, a hydrocarbon-based tackifying resin, an epoxy-based tackifying resin, a polyamide-based tackifying resin, an elastomer-based tackifying resin, a phenol-based tackifying resin, a ketone-based tackifying resin, and the like. The tackifying resin may be used solely or in combination of two or more thereof.

Specifically, as the rosin-based tackifying resin, there may be, for example, mentioned unmodified rosins (raw rosins) such as gum rosin, wood rosin, and tall oil resin and modified rosins modified by hydrogenation, disproportionation, polymerization, or the like, such as hydrogenated rosins, disproportionated rosins, polymerized rosins, and other chemically modified rosins as well as various rosin derivatives and the like. Examples of the above rosin derivatives include rosin esters such as ester compounds of rosins obtainable by esterifying unmodified rosins with alcohols and ester compounds of modified rosins obtainable by esterifying modified rosins such as hydrogenated rosins, disproportionated rosins, or polymerized rosins with alcohols; unsaturated fatty acid-modified rosins obtainable by modifying unmodified rosins or modified rosins such as hydrogenated rosins, disproportionated rosins, or polymerized rosins with unsaturated fatty acids; unsaturated fatty acid-modified rosin esters obtainable by modifying rosin esters with unsaturated fatty acids; rosin alcohols obtainable by reducing the carboxyl group in unmodified rosins, modified rosins such as hydrogenated rosins, disproportionated rosins, or polymerized rosins, unsaturated fatty acid-modified rosins, or unsaturated fatty acid-modified rosin esters; metal salts of rosins such as unmodified rosins, modified rosins, or various rosin derivatives, particularly rosin esters. Moreover, as the rosin derivatives, rosin phenol resins obtainable by incorporating phenol into rosins such as unmodified rosins, modified rosins, or various rosin derivatives by the action of an acid catalyst, followed by thermal polymerization.

As the terpene-based tackifying resin, there may be, for example, mentioned terpene-based resins such as α-pinene polymer, β-pinene polymer, and diterpene polymer, modified terpene-based resins obtainable by modification (phenol modification, aromatic modification, hydrogenation modification, hydrocarbon modification, etc.) of these terpene-based resins, e.g., terpenephenol-based resins, styrene-modified terpene-based resins, aromatic modified terpene-based resins, and hydrogenated terpene-based resins, and the like.

As the hydrocarbon-based tackifying resin, there may be, for example, mentioned various hydrocarbon-based resins, e.g., aliphatic hydrocarbon resins [polymers of aliphatic hydrocarbons such as olefins and dienes having 4 to 5 carbon atoms (olefins such as butene-1, isobutylene, pentene-1; dienes such as butadiene, 1,3-pentadiene, and isoprene)], aromatic hydrocarbon resins [polymers of vinyl group-containing aromatic hydrocarbons having 8 to 10 carbon atoms such as styrene, vinyltoluene, α-methylstyrene, indene, and methylindene], aliphatic cyclic hydrocarbon resins [alicyclic hydrocarbon-based resins obtainable by cyclized dimerization of so-called "C4 petroleum fraction" or "C5 petroleum fraction" and subsequent polymerization, polymers of cyclic diene compounds (cyclopentadiene, dicyclopentadiene, ethylidenenorbornene, dipentene, etc.) or hydrogenated products thereof, alicyclic hydrocarbon-based resins obtainable by hydrogenation of aromatic ring of the following aromatic hydrocarbon resins or aliphatic/aromatic petroleum resins], aliphatic/aromatic petroleum resins (styrene-olefin-based copolymers, etc.), aliphatic/alicyclic petroleum resins, hydrogenated hydrocarbon resins, coumarone-based resins, coumarone-indene-based resins, and the like.

As the tackifying resin, a rosin-based tackifying resin is preferable and in particular, a rosin resin (unmodified rosin); a rosin-based resin subjected to modification such as polymerization, disproportionation, or hydrogenation (modified rosin); a rosin ester such as an ester compound of a rosin and an ester compound of a modified rosin, particularly a polymerized rosin, can be suitably used. As above, by using a rosin-based tackifying resin (particularly, a polymerized rosin) as the tackifying resin, excellent pressure-sensitive adhesive force and repulsion resistance can be imparted and also re-peeling ability and adhesive-residue resistance can be remarkably improved.

In this connection, as the tackifying resin, in order to exhibit a high adhesiveness toward the pressure-sensitive adhesive product, a tackifying resin having a softening point (softening temperature) of 120°C or higher, preferably 130°C or higher, more preferably 140°C or higher is suitable, the softening point being measured by the ring and ball method defined by JIS K 5902. The upper limit of the softening point of the tackifying resin is not particularly limited and may be, for example, 170°C or lower, preferably 160°C or lower, more preferably 155°C or lower.

The ratio of the tackifying resin is not particularly limited and can be suitably selected depending on the kind of the tackifying resin but, for example, is 100 parts by weight or less, preferably 1 to 30 parts by weight, more preferably 2 to 20 parts by weight based on 100 parts by weight of the base polymer of the pressure-sensitive adhesive (e.g., the acrylic polymer in the case of the acrylic pressure-sensitive adhesive). In the case that the rosin-based tackifying agent is used as the tackifying agent, the ratio of the rosin-based tackifying agent is preferably selected from the range of 1 to 30 parts by weight, preferably 2 to 20 parts by weight, more preferably 5 to 15 parts by weight based on 100 parts by weight of the base polymer of the pressure-sensitive adhesive (particularly, acrylic polymer). When the ratio of the tackifying resin is too large, re-peeling ability decreases. In this connection, pressure-sensitive adhesive force and repulsion resistance tend to decrease as the amount of the tackifying resin to be used is lowered.

Moreover, in the invention, for the purpose of controlling pressure-sensitive adhesiveness of the pressure-sensitive adhesive layer or re-peeling ability, it is preferable that a softening agent is contained in the pressure-sensitive adhesive. The softening agent is not particularly limited and can be suitably selected from known softening agents such as mineral oil-based softening agents, vegetable oil-based softening agents, and synthetic softening agents. The softening agent may be used solely or as a mixture of two or more thereof.

Specifically, as the mineral oil-based softening agents, there may be, for example, mentioned petroleum-based softening agents such as paraffin-based softening agents (liquid paraffin), aromatic softening agents, and naphthene-based softening agents, coal tar-based softening agents such as coal tar and coumarone-indene resin, and the like.

As the vegetable oil-based softening agents, there may be, for example, mentioned fatty oil-based softening agents, e.g., fatty acids such as stearic acid and salts thereof, fatty acid esters such as isopropyl mirystate, isopropyl palmitate, ethyl oleate, octyldodecyl myristate, cetyl isooctanoate, glyceryl tri-2-ethylhexanoate, neopentyl glycol dioctanoate, octyldodecyl lactate, and diisostearyl malate, fatty oils such as cottonseed oil, rapeseed oil, palm oil, coconut oil, almond oil, olive oil, camellia oil, persic oil, peanut oil, castor oil, linseed oil, and soybean oil; pinewood-based softening agents such as pine tar, rosin, and sub(factice); and the like.

As the synthetic softening agents, there may be, for example, mentioned synthetic resin-based softening agents such as phenol-aldehyde resins, low-melting-point styrene resins, and liquid rubbers (e.g., liquid polybutene, liquid polybutadiene, liquid polyisoprene, etc.). In this connection, a plasticizer or a liquid tackifying resin may be utilized as a softening agent in some cases.

As the softening agent, a mineral oil-based softening agent, in particular, a petroleum-based softening agent (especially, a liquid paraffin) can be suitably used. Use of a liquid paraffin as the softening agent can remarkably improve re-peeling ability and adhesive-residue resistance and thus the pressure-sensitive adhesive product can be easily peeled off without leaving any component of the pressure-sensitive adhesive on the surface of the adherend.

The liquid paraffin means a paraffin liquid at ambient temperature (20 to 25°C). The liquid paraffin is mainly composed of alkylnaphthenes and is fundamentally a hydrocarbon oil. The liquid paraffin may be used solely or in combination of two or more thereof. The liquid paraffin may be a liquid paraffin for any intended use, such as an industrial liquid paraffin or a pharmaceutical liquid paraffin.

Specifically, it is suitable for the liquid paraffin to have a number-average molecular weight of 300 to 500, preferably 320 to 450, more preferably 350 to 400. When the number-average molecular weight of the liquid paraffin is small, e.g., less than 300, there is a possibility that contamination of the adherend with the liquid paraffin may occur or it may vaporize during drying at the production of a pressure-sensitive adhesive product to cause decrease in performance of the pressure-sensitive adhesive product or contamination of facilities and furthermore, pressure-sensitive adhesive force and repulsion resistance may decrease. On the other hand, when the number-average molecular weight of the liquid paraffin is large, e.g., larger than 500, there is a possibility of occurrence of contamination of the adherend with the liquid paraffin at re-peeling, separation during the production owing to insufficient compatibility with the acrylic polymer, bleeding onto the surface of the pressure-sensitive adhesive, uneven performance, and the like. In this connection, the number-average molecular weight of the liquid paraffin can be determined under known or conventional measuring conditions utilizing a known or conventional method for measuring molecular weight.

Moreover, the liquid paraffin preferably has a dynamic viscosity at 37.8°C of 6 to 80 mm²/second, preferably 10 to 50 mm²/second, more preferably 20 to 30 mm²/second. In this connection, the dynamic viscosity of the liquid paraffin can be determined by dividing the viscosity measured using a capillary dynamic viscosimeter or a common viscosimeter by specific gravity.

The ratio of the softening agent is not particularly limited and can be suitably selected depending on the kind of the softening agents. For example, the ratio is 100 parts by weight or less, e.g., 1 to 80 parts by weight, preferably 5 to 50 parts by weight, more preferably 10 to 40 parts by weight based on 100 parts by weight of the base polymer of the pressure-sensitive adhesive (e.g., the acrylic polymer in the case of the acrylic pressure-sensitive adhesive). In the case that the liquid paraffin is used as the softening agent, the ratio of the liquid paraffin is suitably selected from the range of 6 to 50 parts by weight, preferably 10 to 40 parts by weight, more preferably 15 to 35 parts by weight based on 100 parts by weight of the base polymer of the pressure-sensitive adhesive (particularly, acrylic polymer). When the ratio of the softening agent is too large, there is a possibility of occurrence of contamination of the adherend with the softening agent such as the liquid paraffin at re-peeling, separation during the production owing to insufficient compatibility with the acrylic polymer, bleeding onto the surface of the pressure-sensitive adhesive, uneven performance, and the like and also pressure-sensitive force and repulsion resistance may decrease. In this connection, as the amount of the softening agent is decreased, re-peeling ability tends to decrease.

Furthermore, in the invention, a crosslinking agent may be contained in the pressure-sensitive adhesive, if necessary. The crosslinking agent is not particularly limited and can be suitably selected from among known or conventional crosslinking agents, e.g., isocyanate-based crosslinking agents, epoxy-based crosslinking agents, oxazolidine-based crosslinking agents, aziridine-based crosslinking agents, melamine-based crosslinking agents, peroxide-based crosslinking agents, urea-based crosslinking agents, metal alkoxide-based crosslinking agents, metal chelete-based crosslinking agents, metal salt-based crosslinking agents, carbodiimide-based crosslinking agents, amine-based crosslinking agents, and the like. The crosslinking agents may be used solely or in combination of two or more thereof.

As the crosslinking agent, an isocyanate-based crosslinking agent can be suitably used. The isocyanate-based crosslinking agent is not particularly limited and includes aliphatic polyisocyanates, alicyclic polyisocyanates, aromatic polyisocyanates, aromatic aliphatic polyisocyanates, as well as dimers and trimers thereof and reaction products or polymers thereof. Specifically, examples of the isocyanate-based crosslinking agent include tolylene diisocyanate, hexamethylene diisocyanate, polymethylene polyphenylisocyanate, diphenylmethane diisocyanate, dimer of diphenylmethane diisocyanate, reaction products of trimethylolpropane and tolylene diisocyanate, reaction products of trimethylolpropnae and hexamethylene diisocyanate, polyether polyisocyanates, polyester polyisocyanates, and the like. The amount of the isocyanate-based compound to be used is, for example, about 0.01 to 20 parts by weight, preferably 0.05 to 15 parts by weight based on 100 parts by weight of the acrylic polymer.

The pressure-sensitive adhesive layer can be formed by applying, on a predetermined surface of the substrate, the pressure-sensitive adhesive, followed by drying or curing. At the application of the acrylic pressure-sensitive adhesive, a conventional coater, e.g., a gravure roll coater, a reverse roll coater, a kiss roll coater, a dip roll coater, a bar coater, a knife coater, a spray coater, or the like, can be employed.

The thickness of the pressure-sensitive adhesive layer can be suitably selected from the range of 5 to 50 µm, preferably 10 to 30 µm, for example. When the thickness of the pressure-sensitive adhesive layer is too thin, pressure-sensitive adhesive force and repulsion resistance decrease. On the other hand, when the thickness is too thick, the amount of run-over of the pressure-sensitive adhesive component (adhesive) becomes large.

### (Pressure-sensitive adhesive product)

The pressure-sensitive adhesive product of the invention is not particularly limited as far as it has a constitution wherein a pressure-sensitive adhesive layer is formed on at least one surface (both sides or one side) of a substrate but is preferably a sheet-shape pressure-sensitive adhesive product having or capable of having a form of a sheet-shape article having a pressure-sensitive adhesive layer. Specifically, examples of the pressure-sensitive adhesive product include a pressure-sensitive adhesive sheet (pressure-sensitive adhesive sheet with a substrate), a pressure-sensitive adhesive tape (pressure-sensitive adhesive tape with a substrate), a pressure-sensitive adhesive film, a pressure-sensitive adhesive label, or the like.

In the invention, as the pressure-sensitive adhesive product, the pressure-sensitive adhesive label is suitable. The pressure-sensitive adhesive label usually has a form wherein a pressure-sensitive adhesive layer is formed on at least one surface of the substrate and a display part, e.g., a display part formed utilizing an image-forming means such as printing, is formed on either side or both sides of the substrate but may have the other form. Specifically, as the pressure-sensitive adhesive label, there may be, for example, mentioned a pressure-sensitive adhesive label having a display part on which product information of the adherend to be attached, e.g., name of manufacturer, name of country of manufacture, name of product, product number, product lot number, and bar code, is indicated (nameplate label), a pressure-sensitive adhesive label having a display part indicating a sales price and the like of the adherend, a pressure-sensitive adhesive label having a display part indicating a cautionary statement, usage, and the like of the adherend, a pressure-sensitive adhesive label having a display part indicating logotypes such as a logotype of manufacturer and a logotypes of product as well as a pressure-sensitive adhesive label having a display part indicating a combination of these matters for indication, and the like.

In this connection, in the pressure-sensitive adhesive label, the display part can be formed by utilizing a known display part-forming means such as printing means, e.g., seal printing such as relief printing or screen printing or thermal transfer printing. Moreover, the display part may be formed on the substrate beforehand and may be formed after the pressure-sensitive adhesive layer is formed on a predetermined surface of the substrate.

The pressure-sensitive adhesive product of the invention may have other layers, e.g., an intermediate layer, an under coat layer, etc., within the range where the advantages of the invention are not impaired. Moreover, the pressure-sensitive adhesive layer may be protected by a release liner.

The 180° peeling adhesive force (tensile rate: 300 mm/minute, 23°C, 50%RH) of the pressure-sensitive adhesive product is not particularly limited and, for example, can be suitably selected from the range of 2 N/20mm or more, e.g., 2 to 20 N/20 mm, preferably 5 to 20 N/20 mm. When the 180° peeling adhesive force (tensile rate: 300 mm/minute, 23°C, 50%RH) of the pressure-sensitive adhesive product is less than 2 N/20 mm, pressure-sensitive adhesive force is too small and the product is apt to peel off. The pressure-sensitive adhesive force (180° peeling adhesive force) of the pressure-sensitive adhesive product is determined by measuring a force required for peeling by a tensile tester under conditions of a peeling angle of 180° and a tensile rate of 300 mm in an atmosphere of 23°C and 50%RH after the pressure-sensitive adhesive product is attached by pressure on an acrylonitrile-butadiene-styrene-based resin plate (ABS resin plate) by the method of reciprocating a rubber roller having a weight of 2 kgf once and is allowed to stand under an environment of 23°C and 50%RH for 30 minutes.

In the case that the pressure-sensitive adhesive product desirably has re-peeling ability, the 180° peeling adhesive force (tensile rate: 300 mm/minute, 23°C, 50%RH) of the pressure-sensitive adhesive product is suitably 2 to 5 N/20 mm, preferably 2.5 to 4 N/20 mm. In the case that pressure-sensitive adhesive force is determined from the viewpoint of re-peeling ability, the pressure-sensitive adhesive force (180° peeling adhesive force) of the pressure-sensitive adhesive product is determined by measuring a force required for peeling by a tensile tester under conditions of a peeling angle of 180° and a tensile rate of 300 mm in an atmosphere of 23°C and 50%RH after the pressure-sensitive adhesive product is attached by pressure on a stainless steel plate (SUS plate) burnished with an abrasive paper of No. 280 grain size or an acrylonitrile-butadiene-styrene-based resin plate (ABS resin plate) by the method of reciprocating a rubber roller having a weight of 2 kgf once and is allowed to stand under an environment of 23°C and 50%RH for 3 days.

The pressure-sensitive adhesive product can be produced in accordance with a known process for producing a pressure-sensitive adhesive product, e.g., a known process for producing a pressure-sensitive adhesive tape and a pressure-sensitive adhesive sheet, a known process for producing a pressure-sensitive adhesive film, or a known process for producing a pressure-sensitive adhesive label depending on the kind of the pressure-sensitive adhesive product. Specifically, in the case that the pressure-sensitive adhesive product is a pressure-sensitive adhesive sheet or a pressure-sensitive adhesive film, as a process for producing the pressure-sensitive adhesive sheet or the pressure-sensitive adhesive film, there may be mentioned (1) a preparation method comprising applying a pressure-sensitive adhesive on at least one surface (one side or both sides) of a substrate so that the thickness after drying becomes a predetermined thickness and subsequently drying the pressure-sensitive adhesive to form a pressure-sensitive adhesive layer, (2) a preparation method comprising applying, on a separator, a pressure-sensitive adhesive so that the thickness after drying becomes a predetermined thickness and drying the pressure-sensitive adhesive to form a pressure-sensitive adhesive layer, and then transferring the pressure-sensitive adhesive layer onto at least one surface (one side or both sides) of a substrate; or the like method.

Moreover, in the case that the pressure-sensitive adhesive product is a pressure-sensitive adhesive label, as a process for producing the pressure-sensitive adhesive label, there may be mentioned (1) a preparation method comprising applying a pressure-sensitive adhesive on at least one surface (one side or both sides) of a substrate wherein a display part has been formed on a predetermined surface by printing or the like beforehand so that the thickness after drying becomes a predetermined thickness and subsequently drying the pressure-sensitive adhesive to form a pressure-sensitive adhesive layer; (2) a preparation method comprising applying a pressure-sensitive adhesive on one surface (one side) of a substrate so that the thickness after drying becomes a predetermined thickness and drying the pressure-sensitive adhesive to form a pressure-sensitive adhesive layer and then forming a display part on another surface of the substrate by printing or the like; (3) a preparation method comprising applying, on a separator, a pressure-sensitive adhesive so that the thickness after drying becomes a predetermined thickness and drying the pressure-sensitive adhesive to form a pressure-sensitive adhesive layer, and then transferring the pressure-sensitive adhesive layer onto at least one surface (one side or both sides) of a substrate wherein a display part has been formed on a predetermined surface by printing or the like beforehand; (4) a preparation method comprising applying, on a separator, a pressure-sensitive adhesive so that the thickness after drying becomes a predetermined thickness and drying the pressure-sensitive adhesive to form a pressure-sensitive adhesive layer, then transferring the pressure-sensitive adhesive layer onto one surface (one side) of a substrate, and further forming a display part on another surface of the substrate by printing or the like; or the like method.

In this connection, in the process for producing the above pressure-sensitive adhesive product, it is important to use a substrate formed from a resin composition containing the A-S copolymer and the A-S-A copolymer as main components in a weight ratio of the A-S copolymer to the A-S-A copolymer of 90/10 to 20/80.

In this connection, as the pressure-sensitive adhesive constituting the pressure-sensitive adhesive layer, it is preferable to use an acrylic pressure-sensitive adhesive. In particular, when an acrylic pressure-sensitive adhesive containing an acrylic polymer, a liquid paraffin, and a rosin-based tackifying resin as the acrylic pressure-sensitive adhesive, the pressure-sensitive adhesive layer formed from the acrylic pressure-sensitive adhesive can exhibits an excellent re-peeling ability and the pressure-sensitive adhesive product can be easily peeled off without leaving any component of the pressure-sensitive adhesive on the surface of the adherend. Therefore, a pressure-sensitive adhesive product having a good reworkability can be produced. Moreover, repulsion resistance can be made satisfactory and thus the product can be attached in a good attached state even to an adherend having a curved surface or the like surface.

In the invention, in the case that the pressure-sensitive adhesive product has a long strip-shaped form, it may have a roll-shaped wound form. On this occasion, the pressure-sensitive adhesive layer may be protected by a lease liner or a release surface (release treatment layer surface) formed on the backside of the substrate.

Since the substrate is formed from the resin composition containing the A-S copolymer and the A-S-A copolymer as main components in a weight ratio of the A-S copolymer to the A-S-A copolymer of 90/10 to 20/80, it is possible to substantially recycle the pressure-sensitive adhesive product of the invention together with the adherend in the case that the product is attached to the adherend which is formed from a styrene-based resin or a polycarbonate-based resin as a raw material.

As the adherend, various molded articles using a styrene-based resin, a polycarbonate-based resin, or a resin composition wherein these resins are mixed (mixed resin composition) as a raw material are suitable. The styrene-based resin is not particularly limited as far as it is a resin wherein styrene is used as a monomer component. Specifically, examples of the styrene-based resin include polystyrene, an acrylonitrile-styrene-based resin (so-called "AS resin"), an acrylonitrile-butadiene-styrene-based resin (so-called "ABS resin"), an acrylonitrile-styrene-acrylic rubber resin (so-called "ASA resin"), an acrylonitrile-chlorinated polyethylenestyrene-based resin (so-called "ACS resin"), an acrylonitrile-(ethylene-propylene rubber)-styrene-based resin (so-called "AES resin"), an acrylonitrile-(ethylene-vinyl acetate copolymer)-styrene-based resin, a methyl methacrylate-butadiene-styrene-based resin (so-called "MBS resin"), and the like. Moreover, the styrene-based resin may be, for example, a styrene-based resin in a rubber form or an elastomer form, such as a styrene-butadiene copolymer (SB), a styrene-isoprene copolymer (SI), a styrene-isoprene-styrene block copolymer (SIS), a styrene-butadiene-styrene block copolymer (SBS), a styrene-ethylene-butylene-styrene block copolymer (SEBS), a styrene-ethylene-propylenestyrene block copolymer (SEPS), or a styrene-ethylenepropylene block copolymer (SEP).

The polycarbonate-based resin is not particularly limited as far as it is a resin having a carbonate ester bond [-O-C(=O)-O-] in a main chain. Specifically, as the polycarbonate-based resin, there may be, for example, mentioned polycarbonate-based resins using bisphenol A and carbonyl chloride or diphenyl carbonate as monomer components.

Examples of such molded articles include housings for electronics devices, e.g., housings for so-called "mobile phone", housings for so-called "PHS", housings for so-called "digital camera", housings for so-called "digital video camera", housings for computers, housings for printers, housings for key board or mouse for computers, housings for scanners, housings for drive devices for so-called "hard disk", housings for drive devices for floppy disks, housings for drive devices for so-called "CD" (housings for drive devices in which a disk such as so-called "CD-ROM", "CD-R", or "CD-RW" is usable), housings for drive devices for so-called "DVD" (housings for drive devices in which a disk such as so-called "DVD", "DVD-R", "DVD-RW", "DVD+R", "DVD+RW", or "DVD-RAM" is usable), housings for drive devices for so-called "MO", and housings for other computer-related devices; housings for home appliances, e.g., housings for refrigerators, housings for clothes washing machines, housings for cleaners, housings for so-called "air conditioner", housings for so-called "television" (so-called "Braun tube"-type television, so-called "liquid crystal display"-type television, so-called "plasma display"-type television, etc.), housings for radios, housings for music replay devices (housings for so-called "CD component", housings for so-called "radio-cassette recorder", etc.), housings for picture recording and reproducing devices (housings for picture recording and reproducing devices for television programs in which a video tape, so-called "DVD", or hard disk is usable), housings for so-called "projector"; and housings for various products such as various toys.

The pressure-sensitive adhesive product of the invention can be substantially recycled together with an adherend in the case that the adherend is formed from a styrene-based resin or a polycarbonate-based resin and also has an excellent balance of various physical properties. Therefore, in the case that the pressure-sensitive adhesive product of the invention is attached to housings of various electronics devices using a styrene-based resin or a polycarbonate-based resin as a raw material, the pressure-sensitive adhesive product can be substantially recycled together with the housings without peeling the product in a state of being attached to the housing and hence workability at the recycling can be remarkably improved. Moreover, since the pressure-sensitive adhesive product of the invention is excellent in heat resistance, weather resistance, rigidity, and tear resistance, the product can be easily attached when attached to an adherend and can be easily peeled off when peeled off in the case that it is attached to the adherend by mistake or the like, for example. Moreover, since the product is excellent in heat resistance, it can be attached to the adherend, which may be heated to a high temperature. Also, since the product is excellent in weather resistance, it can be attached to the adherend, which may be exposed to natural light.

The following will describe the invention more specifically with reference to Example thereof. In this connection, in Example and Comparative Examples, the following Acrylonitrile-Styrene Copolymer A was used as an acrylonitrile-styrene copolymer and the following Acrylonitrile-Styrene-Acrylic Rubber Copolymer A as an acrylonitrile-styrene-acrylic rubber copolymer.

### ·Acrylonitrile-Styrene Copolymer A: an acrylonitrile-styrene copolymer wherein the molar ratio of an acrylonitrile unit to a styrene unit as constitutional units was 38/62.

Acrylonitrile-Styrene-Acrylic Rubber Copolymer A: an acrylonitrile-styrene-acrylic rubber copolymer wherein the molar ratio of an acrylonitrile unit to a styrene unit as constitutional units was 38/62 and the ratio of an acrylic rubber unit as a constitutional unit to the acrylonitrile-styrene-acrylic rubber copolymer was 50% by weight.

### EXAMPLE 1

A substrate for a pressure-sensitive adhesive product having a thickness of 60 µm (sometimes referred to as "Substrate A for Pressure-Sensitive Adhesive Product") was obtained by kneading 30 parts by weight of Acrylonitrile-Styrene-Acrylic Rubber Copolymer A with 70 parts by weight of Acrylonitrile-Styrene Copolymer A and subjecting the resulting kneaded product to rolling by a calender process (temperature of calender roll: 180°C).

On the other hand, an acrylic polymer (sometimes referred to as "Acrylic Polymer A") having a weight-average molecular weight of 600,000 was obtained by charging 97 parts by weight of 2-ethylhexyl acrylate, 3 parts by weight of acrylic acid, 0.2 part by weight of 2,2'-azobisisobutyronitrile as a polymerization initiator, and 100 parts by weight of ethyl acetate as a polymerization medium into a reaction vessel fitted with a thermometer, a stirrer, a nitrogen-inlet tube, and the like and carrying out the reaction at 60°C under a nitrogen gas stream.

An acrylic pressure-sensitive adhesive (sometimes referred to as "Acrylic Pressure-Sensitive Adhesive A") was obtained by adding 10 parts by weight of a rosin-based tackifying resin (trade name "Pensel D-135" manufactured by Arakawa Chemical Industries, Ltd.; a rosin-based tackifying resin) and 3 parts by weight of a crosslinking agent (trade name "Coronate L" manufactured by Nippon Polyurethane Industry Co., Ltd.; an isocyanate-based crosslinking agent) to 100 parts by weight of the above Acrylic Polymer A.

The above Acrylic Pressure-Sensitive Adhesive A was applied on the release treatment surface of a separator (separator having a constitution wherein one surface of a polyethylene terephthalate film was subjected to release treatment with a silicone-based releasing agent) so that the thickness after drying was 30 µm and dried and cured to form a pressure-sensitive adhesive layer (thickness: 30 µm). The pressure-sensitive adhesive layer was attached to the above Substrate A for Pressure-Sensitive Adhesive Product by means of a hand roller to obtain a pressure-sensitive adhesive sheet as a pressure-sensitive adhesive product.

### COMPARATIVE EXAMPLE 1

A substrate for a pressure-sensitive adhesive product having a thickness of 60 µm (sometimes referred to as "Substrate B for Pressure-Sensitive Adhesive Product") was obtained by kneading 2 parts by weight of Acrylonitrile-Styrene-Acrylic Rubber Copolymer A with 98 parts by weight of Acrylonitrile-Styrene Copolymer A and subjecting the resulting kneaded product to rolling by a calender process (temperature of calender roll: 180°C).

A pressure-sensitive adhesive sheet as a pressure-sensitive adhesive product was obtained in the same manner as in Example 1 except that Substrate B for Pressure-Sensitive Adhesive Product was used.

### COMPARATIVE EXAMPLE 2

A substrate for a pressure-sensitive adhesive product having a thickness of 60 µm (sometimes referred to as "Substrate C for Pressure-Sensitive Adhesive Product") was obtained by kneading 90 parts by weight of Acrylonitrile-Styrene-Acrylic Rubber Copolymer A with 10 parts by weight of Acrylonitrile-Styrene Copolymer A and subjecting the resulting kneaded product to rolling by a calender process (temperature of calender roll: 180°C).

A pressure-sensitive adhesive sheet as a pressure-sensitive adhesive product was obtained in the same manner as in Example 1 except that Substrate C for Pressure-Sensitive Adhesive Product was used.

### (Evaluation)

On each of the pressure-sensitive adhesive sheets obtained in Example 1 and Comparative Examples 1 and 2, pressure-sensitive adhesive force, handling property at attachment, and re-attaching workability were evaluated or measured by the following evaluating or measuring methods. Evaluation results are shown in Table 1.

### (Measuring method of pressure-sensitive adhesive force)

Each of the pressure-sensitive adhesive sheets obtained in Example 1 and Comparative Examples 1 and 2 was cut into a strip having a width of 20 mm to prepare a pressure-sensitive adhesive product sample. The pressure-sensitive adhesive product sample was attached to a colorless ABS resin plate (acrylonitrile-butadiene-styrene-based resin plate) as an adherend by reciprocating a roller of 2 kg once and allowed to stand under an atmosphere of 23°C and 50%RH for 30 minutes. Thereafter, the pressure-sensitive adhesive product sample was peeled off in an atmosphere of 23°C and 50%RH at a peeling angle of 180° and a tensile rate of 300 mm/minute using a tensile tester and a force required for the peeling at that time (pressure-sensitive adhesive force) was measured.

### (Evaluating method of handling property at attachment)

Each of the pressure-sensitive adhesive sheets obtained in Example 1 and Comparative Examples 1 and 2 was cut into a size of 30 mmx50 mm to prepare a pressure-sensitive adhesive product sample. The pressure-sensitive adhesive product sample was attached to a predetermined position of a plate in a manual fashion and workability at that time (handling property at attachment) was functionally evaluated according to the following evaluation standard.

### Evaluation standard

○: the sheet can be easily attached to the predetermined position.
× : the sheet cannot be easily attached to the predetermined position owing to an insufficient rigidity of the substrate for the pressure-sensitive adhesive product or the like.

### (Evaluating method of re-attaching workability)

Each of the pressure-sensitive adhesive sheets obtained in Example 1 and Comparative Examples 1 and 2 was cut into a size of 30 mmx50 mm to prepare a pressure-sensitive adhesive product sample. The pressure-sensitive adhesive product sample was attached to an ABS resin plate in a manual fashion. After 1 minute, the sample was peeled off from the edge by picking it up with a fingernail and workability at that time (re-attaching workability) was functionally evaluated according to the following evaluation standard.

### Evaluation standard

○: the sheet can be easily peeled off.
× : the sheet cannot be easily peeled off owing to breakage of the substrate for the substrate for the pressure-sensitive adhesive product.

**Table 1**

| | Example 1 | Comparative Example 1 | Comparative Example 2 |
|---|---|---|---|
| Pressure-sensitive adhesive force (N/20 mm) | 9.4 | 10.1 | 8.9 |
| Handling property at attachment | ○ | ○ | × |
| Re-attaching workability | ○ | × | ○ |

From Table 1, the pressure-sensitive adhesive product according to Example 1 has an appropriate pressure-sensitive adhesive force as well as the handling property at attachment is good and also re-attaching workability is good. Therefore, the pressure-sensitive adhesive product can be easily attached at the time when it is attached to an adherend. Moreover, the pressure-sensitive adhesive product can be easily peeled off in the case that the product is peeled off when attached to the adherend by mistake after the product has been attached to the adherend.

Needless to say, since the substrate for the pressure-sensitive adhesive product is formed from a resin composition containing an acrylonitrile-styrene copolymer and an acrylonitrile-styrene-acrylic rubber copolymer as main components, when attached to an adherend formed from a styrene-based resin or a polycarbonate-based resin, the product can be recycled together with the adherend, whereby the plastic materials can be easily reproduced.

While the invention has been described in detail and with reference to specific embodiments thereof, it will be apparent to one skilled in the art that various changes and modifications can be made therein without departing from the spirit and scope thereof.

## Claims

1. A pressure-sensitive adhesive product comprising a substrate having formed on at least one surface thereof a pressure-sensitive adhesive layer, wherein the substrate is formed from a resin composition containing an acrylonitrile-styrene copolymer and an acrylonitrile-styrene-acrylic rubber copolymer as main components and the weight ratio of the acrylonitrile-styrene copolymer to the acrylonitrile-styrene-acrylic rubber copolymer is 90/10 to 20/80.

2. The pressure-sensitive adhesive product according to claim 1, wherein the resin composition has a form where the acrylonitrile-styrene-acrylic rubber copolymer is dispersed in the acrylonitrile-styrene copolymer.

3. The pressure-sensitive adhesive product according to claim 1, wherein the ratio of the acrylic rubber unit as a constitutional unit is 30 to 70% by weight relative to the acrylonitrile-styrene-acrylic rubber copolymer in the acrylonitrile-styrene-acrylic rubber copolymer.

4. The pressure-sensitive adhesive product according to claim 1, wherein the acrylonitrile-styrene-acrylic rubber copolymer is a graft acrylonitrile-styrene-acrylic rubber copolymer having a form where an acrylonitrile-styrene copolymer is grafted to an acrylic rubber.

5. The pressure-sensitive adhesive product according to claim 4, wherein the molar ratio of an acrylonitrile unit to a styrene unit is 30/70 to 45/55 in an acrylonitrile-styrene copolymer unit in the graft acrylonitrile-styrene-acrylic rubber copolymer.

6. The pressure-sensitive adhesive product according to claim 1, wherein the molar ratio of an acrylonitrile unit to a styrene unit is 30/70 to 45/55 in the acrylonitrile-styrene copolymer.

7. The pressure-sensitive adhesive product according to claim 1, wherein the thickness of the substrate is 20 to 200 µm.

8. A substrate for a pressure-sensitive adhesive product having a pressure-sensitive adhesive layer, which is formed from a resin composition containing an acrylonitrile-styrene copolymer and an acrylonitrile-styrene-acrylic rubber copolymer as main components and the weight ratio of the acrylonitrile-styrene copolymer to the acrylonitrile-styrene-acrylic rubber copolymer being 90/10 to 20/80.

9. The substrate for a pressure-sensitive adhesive product according to claim 8, wherein the resin composition has a form where the acrylonitrile-styrene-acrylic rubber copolymer is dispersed in the acrylonitrile-styrene copolymer.

10. The substrate for a pressure-sensitive adhesive product according to claim 8, wherein the ratio of the acrylic rubber unit as a constitutional unit is 30 to 70% by weight relative to the acrylonitrile-styrene-acrylic rubber copolymer in the acrylonitrile-styrene-acrylic rubber copolymer.

11. The substrate for a pressure-sensitive adhesive product according to claim 8, wherein the acrylonitrile-styrene-acrylic rubber copolymer is a graft acrylonitrile-styrene-acrylic rubber copolymer having a form where an acrylonitrile-styrene copolymer is grafted to an acrylic rubber.

12. The substrate for a pressure-sensitive adhesive product according to claim 11, wherein the molar ratio of an acrylonitrile unit to a styrene unit is 30/70 to 45/55 in an acrylonitrile-styrene copolymer unit in the graft acrylonitrile-styrene-acrylic rubber copolymer.

13. The substrate for a pressure-sensitive adhesive product according to claim 8, wherein the molar ratio of an acrylonitrile unit to a styrene unit is 30/70 to 45/55 in the acrylonitrile-styrene copolymer.

14. The substrate for a pressure-sensitive adhesive product according to claim 8, whose thickness is 20 to 200 µm.

## Patentansprüche

1. Druckempfindliches Klebeprodukt, umfassend einen Träger, der auf mindestens einer Oberfläche eine druckempfindliche Klebeschicht aufgebracht hat, wobei der Träger aus einer Harzzusammensetzung, enthaltend ein Acrylnitril-Styrol-Copolymer und ein Acrylnitril-Styrol-Acrylkautschuk-Copolymer als Hauptbestandteile, gebildet ist, und das Gewichtsverhältnis des Acrylnitril-Styrol-Copolymer zu dem Acrylnitril-Styrol-Acrylkautschuk-Copolymer 90/10 bis 20/80 beträgt.

2. Druckempfindliches Klebeprodukt nach Anspruch 1, wobei die Harzzusammensetzung eine Form besitzt, in der das Acrylnitril-Styrol-Acrylkautschuk-Copolymer in dem Acrylnitril-Styrol-Copolymer dispergiert ist.

3. Druckempfindliches Klebeprodukt nach Anspruch 1, wobei das Verhältnis der Acrylkautschukeinheit als eine Baueinheit 30 bis 70 Gew.-% beträgt, relativ zu dem Acrylnitril-Styrol-Acrylkautschuk-Copolymer in dem Acrylnitril-Styrol-Acrylkautschuk-Copolymer.

4. Druckempfindliches Klebeprodukt nach Anspruch 1, wobei das Acrylnitril-Styrol-Acrylkautschuk-Copolymer ein Acrylnitril-Styrol-Acrylkautschuk-Pfropfcopolymer ist, das eine Form besitzt, in der ein Acrylnitril-Styrol-Copolymer auf einen Acrylkautschuk aufgepfropft ist.

5. Druckempfindliches Klebeprodukt nach Anspruch 4, wobei das Molverhältnis von einer Acrylnitrileinheit zu einer Styroleinheit 30/70 bis 45/55 in einer Acrylnitril-Styrol-Copolymereinheit in dem Acrylnitril-Styrol-Acrylkautschuk-Pfropfcopolymer beträgt.

6. Druckempfindliches Klebeprodukt nach Anspruch 1, wobei das Molverhältnis von einer Acrylnitrileinheit zu einer Styroleinheit 30/70 bis 45/55 in dem Acrylnitril-Styrol-Copolymer beträgt.

7. Druckempfindliches Klebeprodukt nach Anspruch 1, wobei die Dicke des Substrats 20 bis 200 µm beträgt.

8. Träger für ein druckempfindliches Klebeprodukt, der eine druckempfindliche Klebeschicht besitzt, die aus einer Harzzusammensetzung, enthaltend ein Acrylnitril-Styrol-Copolymer und ein Acrylnitril-Styrol-Acrylkautschuk-Copolymer als Hauptbestandteile, gebildet ist, und wobei das Gewichtsverhältnis des Acrylnitril-Styrol-Copolymers zu dem Acrylnitril-Styrol-Acrylkautschuk-Copolymer 90/10 bis 20/80 beträgt.

9. Träger für ein druckempfindliches Klebeprodukt nach Anspruch 8, wobei die Harzzusammensetzung eine Form besitzt, in der das Acrylnitril-Styrol-Acrylkautschuk-Copolymer in dem Acrylnitril-Styrol-Copolymer dispergiert ist.

10. Träger für ein druckempfindliches Klebeprodukt nach Anspruch 8, wobei das Verhältnis der Acrylkautschukeinheit als eine Baueinheit 30 bis 70 Gew.-% beträgt, relativ zu dem Acrylnitril-Styrol-Acrylkautschuk-Copolymer in dem Acrylnitril-Styrol-Acrylkautschuk-Copolymer.

11. Träger für ein druckempfindliches Klebeprodukt nach Anspruch 8, wobei das Acrylnitril-Styrol-Acrylkautschuk-Copolymer ein Acrylnitril-Styrol-Acrylkautschuk-Pfropfcopolymer ist, das eine Form besitzt, in der ein Acrylnitril-Styrol-Copolymer auf einen Acrylkautschuk aufgepfropft ist.

12. Träger für ein druckempfindliches Klebeprodukt nach Anspruch 11, wobei das Molverhältnis von einer Acrylnitrileinheit zu einer Styroleinheit 30/70 bis 45/55 in einer Acrylnitril-Styrol-Copolymereinheit in dem Acrylonitril-Styrol-Acrylkautschuk-Pfropfcopolymer beträgt.

13. Träger für ein druckempfindliches Klebeprodukt nach Anspruch 8, wobei das Molverhältnis von einer Acrylnitrileinheit zu einer Styroleinheit 30/70 bis 45/55 in dem Acrylnitril-Styrol-Copolymer beträgt.

14. Träger für ein druckempfindliches Klebeprodukt nach Anspruch 8, dessen Dicke 20 bis 200 µm ist.

## Revendications

1. Produit adhésif sensible à la pression comprenant un substrat présentant formé sur au moins une de sa surface une couche adhésive sensible à la pression, dans lequel le substrat est formé à partir d'une composition de résine contenant un copolymère d'acrylonitrile-styrène et un copolymère d'acrylonitrile-styrène-caoutchouc acrylique comme constituants principaux et le rapport massique du copolymère d'acrylonitrile-styrène au copolymère d'acrylonitrile-styrène-caoutchouc acrylique est de 90/10 à 20/80.

2. Produit adhésif sensible à la pression selon la revendication 1, dans lequel la composition de résine présente une forme où le copolymère d'acrylonitrile-styrène-caoutchouc acrylique est dispersé dans le copolymère d'acrylonitrile-styrène.

3. Produit adhésif sensible à la pression selon la revendication 1, dans lequel le rapport de l'unité de caoutchouc acrylique comme unité constitutionnelle est de 30 à 70 % en poids par rapport au copolymère d'acrylonitrile-styrène-caoutchouc acrylique dans le copolymère d'acrylonitrile-styrène-caoutchouc acrylique.

4. Produit adhésif sensible à la pression selon la revendication 1, dans lequel le copolymère d'acrylonitrile-styrène-caoutchouc acrylique est un copolymère greffé d'acrylonitrile-styrène-caoutchouc acrylique ayant une forme où un copolymère d'acrylonitrile-styrène est greffé sur un caoutchouc acrylique.

5. Produit adhésif sensible à la pression selon la revendication 4, dans lequel le rapport molaire d'une unité d'acrylonitrile à une unité de styrène est de 30/70 à 45/55 dans une unité copolymère d'acrylonitrile-styrène dans le copolymère greffé d'acrylonitrile-styrène-caoutchouc acrylique.

6. Produit adhésif sensible à la pression selon la revendication 1, dans lequel le rapport molaire d'une unité d'acrylonitrile à une unité de styrène est de 30/70 à 45/55 dans le copolymère d'acrylonitrile-styrène.

7. Produit adhésif sensible à la pression selon la revendication 1, dans lequel l'épaisseur du substrat est de 20 à 200 µm.

8. Substrat pour un produit adhésif sensible à la pression ayant une couche adhésive sensible à la pression, lequel est formé à partir d'une composition de résine contenant un copolymère d'acrylonitrile-styrène et un copolymère d'acrylonitrile-styrène-caoutchouc acrylique comme constituants principaux et le rapport massique du copolymère d'acrylonitrile-styrène au copolymère d'acrylonitrile-styrène-caoutchouc acrylique étant de 90/10 à 20/80.

9. Substrat pour un produit adhésif sensible à la pression selon la revendication 8, dans lequel la composition de résine présente une forme où le copolymère d'acrylonitrile-styrène-caoutchouc acrylique est dispersé dans le copolymère d'acrylonitrile-styrène.

10. Substrat pour un produit adhésif sensible à la pression selon la revendication 8, dans lequel le rapport de l'unité de caoutchouc acrylique comme unité constitutionnelle est de 30 à 70 % en poids par rapport au copolymère d'acrylonitrile-styrène-caoutchouc acrylique dans le copolymère d'acrylonitrile-styrène-caoutchouc acrylique.

11. Substrat pour un produit adhésif sensible à la pression selon la revendication 8, dans lequel le copolymère d'acrylonitrile-styrène-caoutchouc acrylique est un copolymère greffé d'acrylonitrile-styrène-caoutchouc acrylique ayant une forme où un copolymère d'acrylonitrile-styrène est greffé sur un caoutchouc acrylique.

12. Substrat pour un produit adhésif sensible à la pression selon la revendication 11, dans lequel le rapport molaire d'une unité d'acrylonitrile à une unité de styrène est de 30/70 à 45/55 dans une unité de copolymère d'acrylonitrile-styrène dans le copolymère greffé d'acrylonitrile-styrène-caoutchouc acrylique.

13. Substrat pour un produit adhésif sensible à la pression selon la revendication 8, dans lequel le rapport molaire d'une unité d'acrylonitrile à une unité de styrène est de 30/70 à 45/55 dans le copolymère d'acrylonitrile-styrène.

14. Substrat pour un produit adhésif sensible à la pression selon la revendication 8, dont l'épaisseur est de 20 à 200 µm.
